# EUROPÄISCHE PATENTSCHRIFT

(11) **EP 1 010 559 B1**
(45) Veröffentlichungstag und Bekanntmachung des Hinweises auf die Patenterteilung: **11.09.2002**
(21) Anmeldenummer: 98123858.7
(22) Anmeldetag: 16.12.1998
(51) Int. Cl.: B60J 7/00

(54) **Sonnenrollo für ein Kraftfahrzeugdach**
Roller blind for motor vehicle
Store roulant pour véhicule automobile

(43) Veröffentlichungstag der Anmeldung: 21.06.2000
(73) Patentinhaber: ArvinMeritor GmbH, 63128 Dietzenbach (DE)
(72) Erfinder: Becher, Thomas Dipl.-Ing., 63110 Rodgau (DE); Böhm, Horst Dipl.-Ing., 60599 Frankfurt (DE); Grimm, Rainer Dipl.-Ing., 60599 Frankfurt (DE)
(74) Vertreter: Oppermann, Ewald, Dipl.-Ing.

(56) Entgegenhaltungen:
- EP-A- 0 644 075
- WO-A-96/01191
- US-A- 4 792 178

## Beschreibung

Die Erfindung bezieht sich auf ein Sonnenrollo für ein Fahrzeugdach entsprechend dem, in WO 96/01191 offenbarten, Oberbegriff des Patentanspruchs 1.

Bei einem derartigen bekannten rolloartig auf eine Wickelspule aufwickelbaren Sonnenschutz (DE 195 38 552 C1) kann zwar eine Mittelstrebe vorgesehen sein, um ein Durchhängen der geschlossenen Sonnenblende zu verhindern, jedoch sind keine Maßnahmen getroffen, um die Rollobahn in Querrichtung zu ihrer Einspannung zwischen ihrem vorderen Ende und ihrer Wickelspule zu spannen. Bei einer ähnlichen bekannten Rolloanordnung (DE 44 24 188 C1) ist die in Längsrichtung aufgespannte Rollobahn durch einen Stützspriegel unterfangen, wodurch die Rollobahn in zwei Spannlängenbereiche unterteilt ist, so daß die Kopffreiheit im Fahrzeuginnenraum durch die Rollobahn nicht nennenswert beeinträchtigt ist. Auch hierbei wird die Rollobahn nur in ihrer Bewegungsrichtung gespannt, nicht dagegen quer dazu.

Tatsächlich werden derartige Sonnenrollos üblicherweise nur zwischen dem vorderen, meist an einer Stange aufgenommenen Rolloende und der Wickelspule gespannt, wodurch selbst bei straffer Spannung der Rollobahn in dieser Richtung die Seitenbereiche der Rollobahn zum Flattern im Fahrtwind neigen, beispielsweise bei luftdurchlässigen, die Dachöffnung verschließenden Rollobahnen.

Ein bekanntes hier gattungsfremdes Insektenschutzrollo (DE 196 39 478 A1) für Tür- oder Fensteröffnungen an Bauwerken besitzt Seitenführungen für das Insektenschutzgewebe, die elastisch verformbare aus Borsten- oder Bürstenelementen gebildete Rückhalteelemente aufweisen, die in Maschenöffnungen der Seitenränder des Insektenschutzgewebes eingreifen. Eine derartige Anordnung ist für Sonnenrollos an Fahrzeugdächern nicht brauchbar, weil die Rückhalteelemente keine ausreichende Sicherung gegen Herausziehen des Rollos aus den Seitenführungen bei den im Fahrbetrieb auf das Rollo einwirkenden dynamischen Windkräften bieten und weil außerdem Sonnenrollos auch nicht immer Maschenöffnungen aufweisen.

Der Erfindung liegt die Aufgabe zugrunde, ein Sonnenrollo für Fahrzeugdächer bereitzustellen, bei dem die Seitenbereiche der Rollobahn keine Flatterbewegungen ausführen können.

Die gestellte Aufgabe wird durch die Merkmale des Patentanspruchs 1 gelöst. Weitere vorteilhafte oder zweckmäßige Ausbildungen gehen aus den Unteransprüchen hervor und sind nachfolgend ebenfalls beschrieben.

Durch die erfindungsgemäße verschiebbare Führung der gegenüberliegenden Seitenränder der Rollobahn in Führungsschienen bei gleichzeitiger Festlegung in Querrichtung zur Rollo-Bewegungsrichtung, so daß die Seitenränder nicht in Querrichtung aus den Führungsschienen herausgezogen werden können, werden die Seitenbereiche der Rollobahn sehr wirksam an Flatterbewegungen gehindert. Hierbei ist eine ebenso einfache wie wirksame Möglichkeit zur Querfestlegung der Seitenränder der Rollobahn bei dennoch möglicher leichter Verschiebbarkeit der Seitenränder in den Führungsschienen durch die besondere Ausbildung der Führungsnuten in den Führungsschienen für die Seitenränder der Rollobahn gegeben. Die Führungsnuten weisen einen gegenüber der Ebene der Rollobahn abgewinkelten Führungsbereich auf, in welchen die Seitenränder der Rollobahn mit Randversteifungen eingreifen. Diese Randversteifungen sind gegenüber der Hauptebene der Rollobahn abknickbar, können jedoch beim Aufwickeln der Rollobahn wieder in ihre gestreckte unabgeknickte Lage zurückgeführt werden, so daß die Rollobahn ohne Abknickung der Seitenränder auf die Wickelspule aufwikkelbar ist. Die abgeknickten Seitenränder werden durch die abgewinkelten Führungsbereiche der Führungsnuten in Querrichtung festgehalten, ohne daß die Verschiebbarkeit der Seitenränder in den Führungsnuten verlorengeht.

Wenn dabei die Führungsschienen entsprechend Anspruch 2 einen solchen Abstand voneinander haben, daß die Rollobahn auch in Querrichtung gespannt wird, ist die Rollobahn gewissermaßen biaxial gespannt und gestrafft und widersteht daher bei geöffnetem Deckel des Fahrzeugdachs dem Fahrtwind praktisch ohne Flatter- und Schwingungsbewegungen.

Die Führungsnuten in den Führungsschienen sind vorteilhaft gemäß Anspruch 3 mit einem Querschnitt ausgestattet, der etwa umgekehrt L-förmig ist, wobei sich der kürzere waagerechte Schenkel etwa in der Ebene der Rollobahn befindet, während der längere nach unten gerichtete Schenkel den Führungsbereich für den Seitenrand der Rollobahn bildet. Wenn dabei entsprechend Anspruch 4 der abgewinkelte Führungsbereich etwa senkrecht zur Ebene der Rollobahn ausgerichtet ist, wird der zugeordnete Seitenrand der Rollobahn innerhalb der Führungsschiene etwa rechtwinklig abgeknickt und ist damit gegen seitliches Herausziehen quer zur Rollo-Bewegungsrichtung sicher festgelegt.

Nach dem Vorschlag des Anspruchs 5 wird das Rollo zu beiden Seiten durch Zugseile od.dgl. betätigt, die unauffällig in den Führungsschienen untergebracht sind. Hierfür können gemäß Anspruch 6 die Führungsnuten jeweils unterhalb des abgewinkelten Führungsbereichs einen Aufnahmekanal für das Zugseil od.dgl. aufweisen.

Um ein stets erneutes Einfädeln der Seitenränder der Rollobahn in die Führungsschienen zu vermeiden, wenn das aufgewickelte Rollo geschlossen werden soll, ist es von Vorteil, wenn entsprechend Anspruch 7 die Seitenränder der Rollobahn mit ihren vorderen Enden ständig in den Führungsschienen verbleiben, d.h. an diesen vorderen Enden ihre gegenüber der Ebene der Rollobahn abgewinkelte bzw. abgeknickte Lage beibehalten.

Das Abbiegen bzw. Abknicken der Seitenränder vor Einführung derselben in die Führungsnuten der Führungsschienen läßt sich durch Anordnung von Leitelementen entsprechend Anspruch 8 erleichtern. Diese Leitelemente nehmen an ihrem einen Ende die Seitenränder der Rollobahn in Flachlage auf und geben sie an ihrem anderen Ende in der abgeknickten bzw. abgewinkelten Lage an die entsprechenden Führungsnuten in den Führungsschienen weiter. Zu diesem Zweck besitzen die Leitelemente entsprechend dem Anspruch 9 jeweils einen zur Rollobahn hin offenen Führungskanal, der in einem Teilbereich, nämlich im Führungsbereich für die Seitenränder der Rollobahn, ohne Übergangsstufen räumlich gedreht angeordnet ist, wodurch die Seitenränder bei ihrem Durchgang durch das Leitelement stetig und nach und nach in ihre gewünschte Lage abgebogen bzw. abgeknickt werden.

Weitere Einzelheiten der Erfindung werden anhand der Ausführungsbeispiele teilweise in schematischer Wiedergabe darstellenden Zeichnungen näher erläutert. Darin zeigt:
- Fig. 1: eine abgebrochene Perspektivdarstellung des Sonnenrollos und seiner Anordnung am Fahrzeugdach,
- Fig. 2: den abgebrochenen Schnitt durch die Anordnung entsprechend der Linie II-II in Fig. 1,
- Fig. 3: den abgebrochenen Schnitt durch die Wickelspule und ihre dachseitige Halterung entsprechend der Linie III-III in Fig. 1,

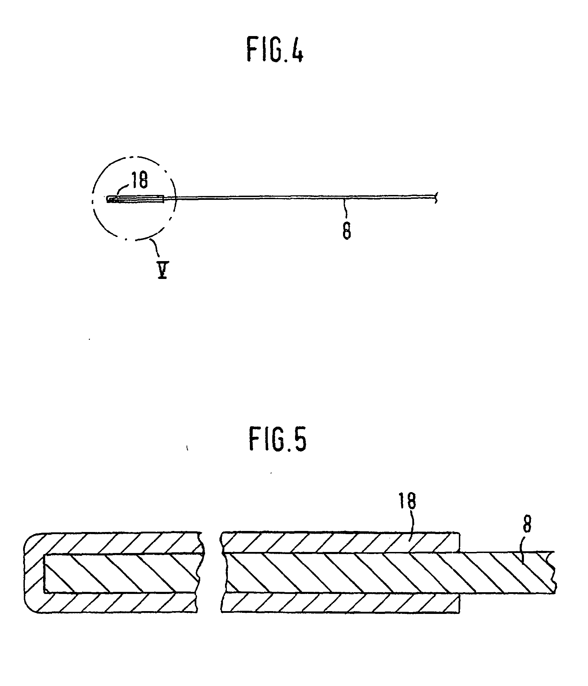

- Fig. 4: den abgebrochenen Schnitt durch die Rollobahn entsprechend der Linie IV-IV in Fig. 1,
- Fig. 5: den abgebrochenen und vergrößerten Schnitt durch die Rollobahn entsprechend dem Detailkreis V in Fig. 4,
- Fig. 6: eine der Fig. 1 entsprechende Perspektivdarstellung, jedoch mit zusätzlichem Leitelement für den Seitenrand der Rollobahn und
- Fig. 7: eine gegenüber Fig. 6 vergrößerte Perspektivdarstellung des Leitelements.

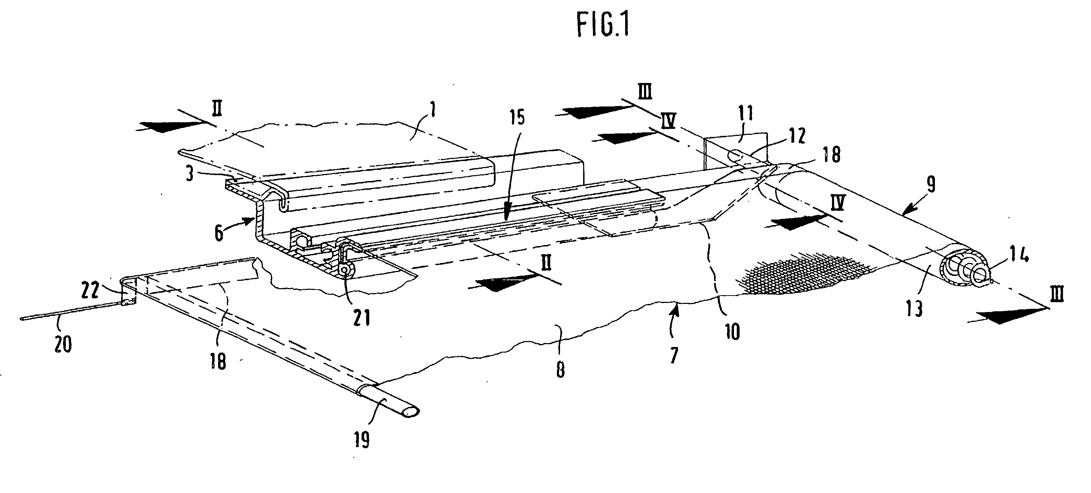

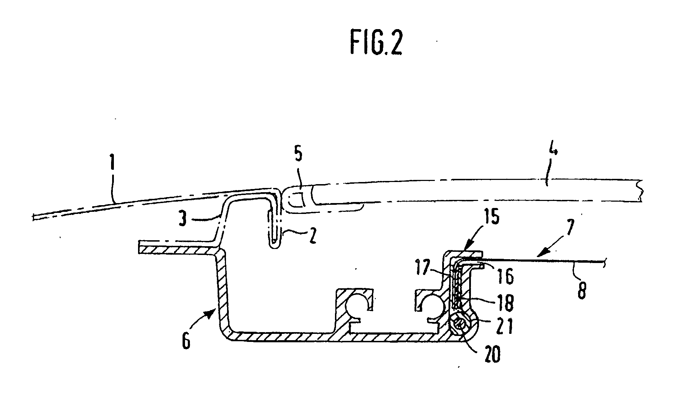

In Fig. 1 sind die feste Dachfläche 1 eines Fahrzeugdachs und der die in der festen Dachfläche 1 angebrachte Dachöffnung 2 umgebende Verstärkungsrahmen 3 sowie in Fig. 2 zusätzlich der der Dachöffnung 2 zugeordnete Deckel 4 und dessen Randspaltabdichtprofil 5 in strichpunktierten Linien eingezeichnet. Im gezeichneten Beispiel ist der Deckel 4 ein Glasdeckel, könnte jedoch auch als Blechdeckel ausgebildet sein. Der Deckel 4 ist in an sich bekannter Weise gegenüber der Dachöffnung 2 verlagerbar angeordnet, was an dieser Stelle keiner näheren Erläuterung bedarf, weil diese Anordnung nicht zu der vorliegenden Erfindung gehört.

In den Fig. 1 und 2 ist lediglich die eine Seite der Dachanordnung und des Sonnenrollos dargestellt. Die gegenüberliegende Seite ist spiegelbildlich ausgeführt, wobei die beiden Seiten im hier interessierenden Bereich des Sonnenrollos parallel zueinander angeordnet sind. An dem Verstärkungsrahmen 3 ist ein Dachrahmen 6 befestigt, der beispielsweise aus einem stranggepreßten Aluminiumprofil gebildet ist. Unterhalb des Deckels 4 ist das allgemein mit der Bezugszahl 7 bezeichnete Sonnenrollo angeordnet, dessen Rollobahn 8 auf eine Wickelspule 9 aufwickelbar ist. Zur drehbaren Halterung der Wickelspule 9 ist ein an dem Dachrahmen 6 befestigtes Halteblech 10 vorgesehen, das mit einem nach oben aufgekanteten Lagerbock 11 versehen ist. In einer Bohrung des Lagerbocks 11 ist ein Lagerzapfen 12 der Wickelspule 9 drehbar gelagert. Die Wickelspule 9 besitzt einen hohlzylindrischen Wickelkörper 13, der konzentrisch zum Lagerzapfen 12 angeordnet ist und eine als Schraubendrehfeder ausgebildete Rückholfeder 14 umschließt. Während das gezeichnete Ende der Rückholfeder 14 exzentrisch in der Wickelspule 9 festgelegt ist, ist das (nicht gezeigte) andere Ende der Rückholfeder 14 außerhalb der Wickelspule 9 ortsfest festgelegt, so daß beim Abwickeln der Rollobahn 8 von der Wickelspule 9 die Rückholfeder 14 gespannt wird. Sobald die auf die Rollobahn 8 einwirkenden Zugkräfte zur Abwicklung der Rollobahn aufgehoben werden bzw. kleiner werden als die gespeicherte Federkraft, wird die Rollobahn 8 selbsttätig auf die Wickelspule 9 aufgewickelt.

Die Rollobahn 8 besteht beispielsweise aus einem luftdurchlässigen Gewebematerial, das entsprechend dem gewünschten Grad der Lichtabschirmung mehr oder weniger lichtdurchlässig ausgebildet sein kann. Die beiden gegenüberliegenden Seitenränder der Rollobahn 8 sind in Rollo-Bewegungsrichtung auf noch zu beschreibende Weise verschiebbar in Führungsschienen 15 geführt, aber quer zur Rollo-Bewegungsrichtung gegen Herausziehen aus den Führungsschienen 15 festgelegt. Dabei können die Führungsschienen 15 einen derartigen gegenseitigen Abstand haben, daß die in ihnen verschiebbar geführten Seitenränder der Rollobahn 8 die Rollobahn auch in Querrichtung spannen.

Im gezeichneten Beispiel sind die Führungsschienen 15 integraler Bestandteil des Dachrahmens 6 und können bei der Strangpreßformung des Dachrahmenprofils gebildet werden. Die Führungsschienen 15 weisen Führungsnuten für die Seitenränder der Rollobahn 8 auf. Diese Führungsnuten besitzen jeweils einen oberen in der Ebene der Rollobahn 8 befindlichen Durchtrittskanal 16 für die Rollobahn 8, an welchen sich ein nach unten gerichtet abgewinkelter Führungsbereich 17 für den zugeordneten Seitenrand der Rollobahn anschließt. Wie insbesondere Fig. 2 verdeutlicht, ist im Ausführungsbeispiel der nach unten abgewinkelte Führungsbereich 17 etwa senkrecht zur Ebene der Rollobahn 8 ausgerichtet.

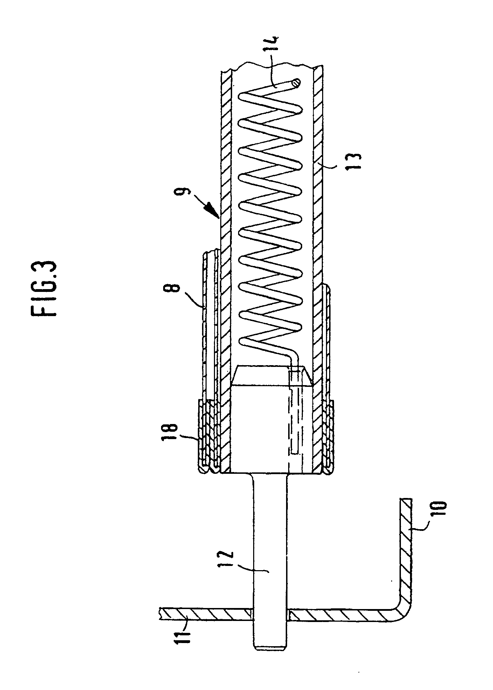

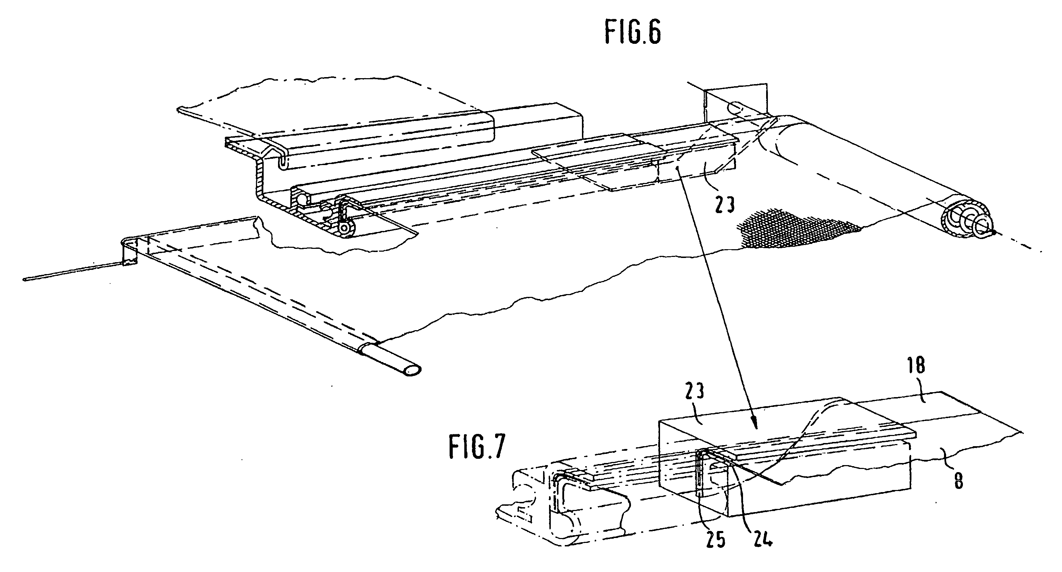

Für den Eingriff der Seitenränder der Rollobahn sind die Seitenränder mit Randversteifungen 18 gleichbleibender Breite versehen. Diese Randversteifungen sind zum Eingriff in die abgewinkelten Führungsbereiche 17 gegenüber der Ebene der Rollobahn 8 abknickbar, jedoch zum Aufwickeln der Rollobahn auf die Wickelspule 9 in ihre gestreckte unabgeknickte Lage, wie sie in Fig. 3 dargestellt ist, rückführbar. Die Randversteifung 18 der Rollobahn 8 kann, wie in Fig. 5 mit übertriebenen Dickenabmessungen dargestellt ist, als U-förmig angespritzter oder aufkaschierter Kunststoffrand ausgebildet sein. Bei Verwendung eines geeigneten Flächenmaterials für die Rollobahn 8 und/oder eines geeigneten Kunststoffs kann es auch ausreichen, wenn die Seitenränder der Rollobahn mit Kunststoff getränkt sind. Jedenfalls sind die Randversteifungen 18 so auszuführen, daß sie in Rollo-Bewegungsrichtung zum Aufwickeln auf die und zum Abwickeln von der Wickelspule 9 leicht biegbar sind, sich in Querrichtung gesehen an der Übergangsstelle zwischen den Randstreifen und der freien Rollobahn 8 jedoch leichter abknicken als innerhalb des Randstreifens quer zur Rollo-Bewegungsrichtung biegen lassen.

Am vorderen Ende der Rollobahn 8 ist ein Querstab 19 in üblicher Weise in einem aus dem Rollobahnmaterial gebildeten Schlauch angeordnet. Durch Kraftangriff auf den Querstab 19 in einer von der Wickelspule 9 wegführenden Richtung wird das Rollo von der Wickelspule 9 abgewickelt, erhält dadurch in Rollobewegungsrichtung Spannung und gleichzeitig durch die beschriebene Anordnung und Ausbildung der Führungsschienen 15 auch in Querrichtung. Dieser Kraftangriff kann von Hand erfolgen, wobei (nicht dargestellte) Rastmöglichkeiten für den Querstab zur Einstellung von Rollo-Zwischenstellungen vorgesehen sein können. Vorzugsweise ist jedoch vorgesehen, daß in den Führungsschienen 15 jeweils ein an das vordere Ende der Rollobahn 8 bzw. an das Ende des Querstabs 19 angreifendes Zugseil od.dgl. 20 zur Rollobetätigung untergebracht ist. Das Zugseil kann beispielsweise als Bowdenzug ausgebildet sein, kann aber auch ein Gewindekabel der für Schiebedachbetätigungen üblichen Ausführungen sein, bei welchem auf dem Kabel eine Gewindewicklung für den Eingriff eines durch Handkurbel oder Elektromotor angetriebenen Zahnritzels vorgesehen ist. Für die Unterbringung des Zugseils od.dgl. 20 können die beschriebenen Führungsnuten jeweils unterhalb des abgewinkelten Führungsbereichs 17 einen Aufnahmekanal 21 aufweisen, wie das beispielsweise aus den Fig. 1 und 2 hervorgeht. Das Zugseil 20 ist über einen Mitnehmer 22 mit dem Ende des Querstabs 19 fest verbunden.

Die Anordnung ist so getroffen, daß die Rollobahn 8 nur so weit auf die Wickelspule 9 aufwickelbar ist, daß die mit Randversteifungen 18 versehenen Seitenränder der Rollobahn mit ihren vorderen Enden ständig an den Führungsschienen 15 bzw. in den Führungsnuten der Führungsschienen 15 verbleiben.

Wie aus den Fig. 6 und 7 hervorgeht, kann zusätzlich am hinteren Ende der Führungsschienen 15 zwischen der Führungsschiene und der Wickelspule 9 ein Leitelement 23 dachseitig befestigt sein. Zweckmäßig ist das Leitelement 23 an dem Dachrahmen 6 befestigt. Das Leitelement 23 nimmt den zugehörigen mit Randversteifung 18 versehenen Seitenrand der Rollobahn 8 an seinem der Wickelspule 9 zugekehrten Ende auf und leitet den Seitenrand an seinem der Führungsschiene 15 zugekehrten Ende in die Führungsnut der Führungsschiene. Zu diesem Zweck besitzt das Leitelement 23 einen zur Rollobahn 8 hin offenen Führungskanal 24, der mit einem Führungsbereich 25 für den zugehörigen mit Randversteifung 18 versehenen Seitenrand in Rollo-Bewegungsrichtung räumlich gedreht angeordnet ist. Die Anordnung ist derart, daß sich dieser Führungsbereich 25 am der Wickelspule 9 zugekehrten Ende des Leitelements 23 etwa in der Ebene der Rollobahn 8 befindet, am der Führungsschiene 15 zugekehrten Ende des Leitelements 23 jedoch fluchtend an den entsprechenden abgewinkelten Führungsbereich 17 der Führungsnut in der benachbarten Führungsschiene 15 angeschlossen ist. Der räumlich gedrehte Führungskanal sorgt dabei für eine Umlenkung des mit der Randversteifung 18 versehenen Seitenrands der Rollobahn beim Abwicklungsvorgang aus der gestreckten Flachlage, wie sie rechts in der Fig. 7 dargestellt ist, in die rechtwinklig abgeknickte Lage, wie sie links in Fig. 7 dargestellt ist, und beim Aufwickelvorgang bewirkt der räumlich gedrehte Führungskanal 24 eine Rückführung des rechtwinklig abgeknickten versteiften Seitenstreifens in seine aufwickelfähige Flachlage.

Es wird ein Sonnenrollo für ein Kraftfahrzeugdach vorgeschlagen, bei dem unterhalb eines einer Dachöffnung verlagerbar zugeordneten Deckels ein bei Nichtgebrauch selbsttätig auf eine dachseitig gehalterte Wickelspule aufgerolltes Sonnenrollo angeordnet ist. Die Rollobahn des Sonnenrollos ist mit ihren Seitenkanten an seitlich in der Dachöffnung angebrachten Führungsschienen verschiebbar geführt. Die Führungsschienen und die Seitenkanten der Rollobahn sind so ausgebildet und greifen so miteinander ein, daß sich die Seitenkanten in den Führungsschienen bei Öffnungs- und Schließbewegungen des Sonnenrollos leicht verschieben lassen, jedoch nicht quer zur Rollo-Bewegungsrichtung aus den Führungsschienen herausgezogen werden können, wodurch die Randbereiche der Rollobahn gegen Flatterund Schwingungsbewegungen festgehalten werden.

## Patentansprüche

1. Sonnenrollo für ein Fahrzeugdach mit einem einer Dachöffnung (2) zugeordneten Deckel (4), mit einer unterhalb des Deckels angeordneten, auf eine Wickelspule (9) selbsttätig aufwickelbaren Rollobahn (8), wobei die Wickelspule (9) an dachseitigen Halterungen (10, 11) drehbar angebracht ist, **dadurch gekennzeichnet, daß** die gegenüberliegenden Seitenränder der Rollobahn (8) in Rollo-Bewegungsrichtung verschiebbar in Führungsschienen (15) geführt, aber quer zur Rollo-Bewegungsrichtung gegen Herausziehen aus den Führungsschienen (15) festgelegt sind, daß die Führungsschienen (15) Führungsnuten mit einem gegenüber der Ebene der Rollobahn (8) abgewinkelten Führungsbereich (17) aufweisen und daß die Rollobahn (8) an ihren gegenüberliegenden Seitenrändern mit Randversteifungen (18) versehen ist, die zum Eingriff in die abgewinkelten Führungsbereiche (17) gegenüber der Ebene der Rollobahn (8) abknickbar sind, jedoch zum Aufwickeln der Rollobahn (8) auf die Wickelspule (9) in ihre gestreckte unabgeknickte Flachlage rückführbar sind.

2. Sonnenrollo nach Anspruch 1, **dadurch gekennzeichnet, daß** die Führungsschienen (15) einen derartigen gegenseitigen Abstand haben, daß die in ihnen verschiebbar geführten Seitenränder der Rollobahn (8) die Rollobahn auch in Querrichtung spannen.

3. Sonnenrollo nach Anspruch 1, **dadurch gekennzeichnet, daß** die Führungsnuten jeweils einen oberen in der Ebene der Rollobahn (8) befindlichen Durchtrittskanal (16) für die Rollobahn aufweisen, an welchen sich der abgewinkelte Führungsbereich (17) nach unten gerichtet anschließt.

4. Sonnenrollo nach Anspruch 1 oder 3, **dadurch gekennzeichnet, daß** der abgewinkelte Führungsbereich (17) etwa senkrecht zur Ebene der Rollobahn (8) ausgerichtet ist.

5. Sonnenrollo nach einem der Ansprüche 1 bis 4, **dadurch gekennzeichnet, daß** in den Führungsschienen (15) jeweils ein an das vordere, der Wicklungsspule (9) abgewandte Ende der Rollobahn (8) angreifendes Zugseil od.dgl. (20) zur Rollobetätigung untergebracht ist.

6. Sonnenrollo nach Anspruch 5, **dadurch gekennzeichnet, daß** die Führungsnuten jeweils unterhalb des abgewinkelten Führungsbereichs (17) einen Aufnahmekanal (21) für das Zugseil od.dgl. (20) aufweisen.

7. Sonnenrollo nach einem der Ansprüche 1 bis 6, **dadurch gekennzeichnet, daß** die Rollobahn (8) nur so weit auf die Wickelspule (9) aufwickelbar ist, daß die Seitenränder der Rollobahn mit ihren vorderen Enden ständig in den Führungsschienen (15) verbleiben.

8. Sonnenrollo nach einem der Ansprüche 1 bis 7, **dadurch gekennzeichnet, daß** am hinteren Ende der Führungsschienen (15) zwischen Führungsschiene und Wickelspule (9) jeweils ein Leitelement (23) dachseitig befestigt ist, welches den zugehörigen Seitenrand der Rollobahn (8) an seinem der Wickelspule (9) zugekehrten Ende aufnimmt und an seinem der Führungsschiene (15) zugekehrten Ende in die Führungsschiene leitet.

9. Sonnenrollo nach einem der Ansprüche 1 und 3 bis 8, **dadurch gekennzeichnet, daß** das Leitelement (23) einen zur Rollobahn (8) hin offenen Führungskanal (24) besitzt, der mit einem Führungsbereich (25) für den zugehörigen Seitenrand in Rollo-Bewegungsrichtung räumlich gedreht angeordnet ist, derart, daß sich dieser Führungsbereich (25) am der Wickelspule (9) zugekehrten Ende des Leitelements (23) etwa in der Ebene der Rollobahn (8) befindet, am der Führungsschiene (15) zugekehrten Ende des Leitelements (23) jedoch fluchtend an den entsprechenden abgewinkelten Führungsbereich (17) der Führungsnut in der benachbarten Führungsschiene (15) angeschlossen ist.

## Claims

1. Sun blind for a vehicle roof with a panel (4) assigned to a roof opening (2), with a blind sheet (8) which is positioned below the panel and can be wound automatically on a spool (9), whereby the spool (9) is attached in a rotatable manner to roof-side mounts (10, 11), **characterised in that** the opposing side edges of the blind sheet (8) are guided in a sliding manner in guide rails (15) in the direction of movement of the blind but are fixed in a transverse direction to the direction of movement of the blind against extraction from the guide rails (15), that the guide rails (15) have guide grooves with a guide area (17) which is angular relative to the level of the blind sheet (8) and that the blind sheet (8) is provided at its opposing side edges with strengthened borders (18) which can be folded over for engagement with the guide areas (17) angular relative to the level of the blind sheet (8) but can be restored to their straight, unfolded, flat position for the winding of the blind sheet (8) onto the spool (9).

2. Sun blind according to Claim 1, **characterised in that** the mutual spacing of the guide rails (15) is such that the side edges of the blind sheet (8) guided in a sliding manner in them also tauten the blind sheet in a transverse direction.

3. Sun blind according to Claim 1, **characterised in that** the guide grooves each have an upper through-channel (16) for the blind sheet at the level of the blind sheet (8) onto which the angular guide area (17) joins below.

4. Sun blind according to Claim 1 or 3, **characterised in that** the offset guide area (17) is aligned approximately perpendicular to the level of the blind sheet (8).

5. Sun blind according to one of Claims 1 to 4, **characterised in that** a traction cable or similar (20) which acts upon the front end of the blind sheet (8), turned off from the spool (9), is accomodated in each of the guide rails (15) to actuate the blind.

6. Sun blind according to Claim 5, **characterised in that** the guide grooves have a location channel (21) for the traction cable or similar (20) below the angular guide area (17).

7. Sun blind according to one of Claims 1 to 6, **characterised in that** the blind sheet (8) can only be wound onto the spool (9) to such an extent that the front ends of the side edges of the blind sheet always remain in the guide rails (15).

8. Sun blind according to one of Claims 1 to 7, **characterised in that** a guide element (23) is attached roof-side at the rear end of each of the guide rails (15) between guide rail and spool (9), this receiving the associated side edge of the blind sheet (8) at the end facing the spool (9) and directing it into the guide rail at the end facing the guide rail (15).

9. Sun blind according to one of Claims 1 and 3 to 8, **characterised in that** the guide element (23) has a guide channel (24) which is open towards the blind sheet (8), the channel, with a guide area (25) for the associated side edge, being positioned in a spatially rotated manner in the direction of movement of the blind in such a manner that this guide area (25), at the end of the guide element (23) facing the spool (9), is situated approximately at the level of the blind sheet (8), but, at the end of the guide element (23) facing the guide rail (15), is aligned with the corresponding angular guide area (17) of the guide groove in the adjacent guide rail (15).

## Revendications

1. Store roulant anti-solaire pour le toit d'un véhicule automobile, comportant un couvercle (4) associé à une ouverture de toit (2), une bande de store (8) agencée au-dessous du couvercle et enroulable automatiquement sur une bobine d'enroulement (9), la bobine d'enroulement (9) étant fixée avec faculté de rotation sur des montures (10, 11) côté toit, **caractérisé en ce que** les bords latéraux opposés de la bande de store (8) sont guidés mobiles en direction de déplacement de store dans des rails de guidage (15) mais fixés perpendiculairement à la direction de déplacement de store à l'encontre d'une extraction hors des rails de guidage (15), **en ce que** les rails de guidage (15) comprennent des gorges de guidage qui présentent une zone de guidage (17) coudée par rapport au plan de la bande de store (8), et **en ce que** la bande de store (8) est pourvue, sur ses bords latéraux opposés, de rigidifications marginales (18) qui peuvent être repliées par rapport au plan de la bande de store (8) pour s'engager dans les zones de guidage coudées (17) mais qui peuvent être ramenées dans leur position étirée à plat non repliée pour l'enroulement de la bande de store (8) sur la bobine d'enroulement (9).

2. Store roulant anti-solaire selon la revendication 1, **caractérisé en ce que** les rails de guidage (15) présentent une distance mutuelle telle que les bords latéraux de la bande de store (8) guidés en déplacement sur lesdits rails tendent la bande de store également en direction transversale.

3. Store roulant anti-solaire selon la revendication 1, **caractérisé en ce que** les gorges de guidage présentent chacune un canal de passage supérieur (16) situé dans le plan de la bande de store (8) pour la bande de store, auquel se raccorde la zone de guidage coudée (17) en étant dirigée vers le bas.

4. Store roulant anti-solaire selon l'une ou l'autre des revendications 1 et 3, **caractérisé en ce que** la zone de guidage coudée (17) est orientée approximativement perpendiculairement au plan de la bande de store (8).

5. Store roulant anti-solaire selon l'une des revendications 1 à 4, **caractérisé en ce qu'**un câble de traction respectif ou analogue (20) qui attaque l'extrémité avant, détournée de la bobine d'enroulement (9), de la bande de store (8) est logé dans les rails de guidage (15) pour l'actionnement du store.

6. Store roulant anti-solaire selon la revendication 5, **caractérisé en ce que** les gorges de guidage présentent chacune un canal de réception (21) pour le câble de traction ou analogue (20) au-dessous de la zone de guidage coudée (17).

7. Store roulant anti-solaire selon l'une des revendications 1 à 6, **caractérisé en ce que** la bande de store (8) est enroulable sur la bobine d'enroulement (9) uniquement aussi loin que les bords latéraux de la bande de store demeurent avec leurs extrémités avant en permanence dans les rails de guidage (15).

8. Store roulant anti-solaire selon l'une des revendications 1 à 7, **caractérisé en ce qu'**à l'extrémité arrière des rails de guidage (15), un élément directeur respectif (23) est fixé du côté toit entre le rail de guidage et la bobine d'enroulement (9), élément qui reçoit le bord latéral associé de la bande de store (8) à son extrémité orientée vers la bobine d'enroulement (9) et le dirige dans le rail de guidage à son extrémité tournée vers le rail de guidage (15).

9. Store roulant anti-solaire selon l'une des revendications 1 et 3 à 8, **caractérisé en ce que** l'élément directeur (23) possède un canal de guidage (24) ouvert vers la bande de store (8), qui est agencé de façon tournée dans l'espace en direction de déplacement du store par une zone de guidage (25) pour le bord latéral associé, de telle sorte que cette zone de guidage (25) se trouve, au niveau de l'extrémité de l'élément directeur (23) orientée vers la bobine d'enroulement (9), approximativement dans le plan de la bande de store (8), mais qu'elle est raccordée, au niveau de l'extrémité de l'élément directeur (23) orientée vers le rail de guidage (15), en alignement à la zone de guidage coudée correspondante (17) de la gorge de guidage dans le rail de guidage voisin (15).
